# EUROPEAN PATENT SPECIFICATION

(11) **EP 4 191 323 B1**
(45) Date of publication and mention of the grant of the patent: **09.12.2026**
(21) Application number: 21851084.0
(22) Date of filing: 27.07.2021
(51) Int. Cl.: G02C 5/12, G02B 27/01

(54) **EYEGLASS FRAME STRUCTURE AND WEARABLE DEVICE**
BRILLENRAHMENSTRUKTUR UND WEARABLE-VORRICHTUNG
STRUCTURE DE MONTURE DE LUNETTES ET DISPOSITIF PORTATIF

(30) Priority: 28.07.2020 CN 202010736413
(43) Date of publication of application: 07.06.2023
(73) Proprietor: Vivo Mobile Communication Co., Ltd., Dongguan, Guangdong 523863 (CN)
(72) Inventor: WANG, Wei, Dongguan, Guangdong 523863 (CN)
(74) Representative: Murgitroyd & Company
(86) International application number: PCT/CN2021/108620
(87) International publication number: WO 2022/022497

(56) References cited:
- CN-A- 106 773 125
- CN-A- 109 407 336
- CN-A- 111 880 322
- CN-U- 202 815 338
- CN-U- 210 534 461
- JP-U- 3 212 105
- US-A- 4 787 729
- US-A- 5 971 538
- US-A1- 2002 101 561
- US-A1- 2015 146 157
- US-B1- 6 480 174

## Description

### TECHNICAL FIELD

The present application relates to the technical field of electronic products, and in particular, to a glass frame structure and a wearable device.

### BACKGROUND

With the development of electronic devices, there are more and more types of electronic devices, and there are also more and more types of wearable devices such as smart glasses and smart bracelets. For example, smart glasses have changed from the initial monocular form to head-mounted glasses, traditional glasses, etc. Users can enjoy the application experience by wearing smart glasses, so that more and more smart glasses products are favored by a wide range of users. However, for users who need to wear ordinary glasses on a daily basis, such as myopia glasses, if the user wears smart glasses after taking off the myopia glasses, the viewing experience of the smart glasses will be affected. If the smart glasses are worn directly without taking off the myopia glasses, because myopia glasses need to be accommodated between human eyes and the lens of the smart glasses, it is inconvenient to wear smart glasses due to the limited distance between the forehead and the smart glasses. In addition, the size of the nose support pad set on the glass frame in the current smart glasses is generally fixed. Due to the differences in the face shapes and nose shapes of different users, this type of smart glasses cannot be worn by different users.

US6480174B1 discloses that an eyeglass-mount display (EMD) device includes a frame, a display pod, and a personalized module removably coupled to the frame. The frame has a cross-bracket and a pair of ear pieces each coupled to an end of the crossbracket. The display pod is mounted to the cross-bracket and includes an electronic image generator for generating an image and optics for creating a virtual image. The personalized module includes preset fitting adjustments specific to a particular user.

CN210534461U discloses a spectacle frame structure. The spectacle frame structure includes a spectacle frame main body for assembling lenses, spectacle legs, a movable piece and a limiting piece, a slot is formed in the inner side of the middle of the spectacle frame main body.

US2015/146157A1 discloses an article of eyewear includes a frame. The frame includes a front frame defining a left aperture and a right aperture. The frame also includes a left temple arm and a right temple arm. The frame further includes an accessory attachment opening adapted to detachably receive an accessory.

CN202815338U discloses a glasses frame and double-lens combined structure.

JP 3212105U discloses a glass frame including a pair of pose pads.

### SUMMARY

Embodiments of the present application provide a glass frame structure and a wearable device to solve the problem that the current glass frame structure is inconvenient for different users to wear.

To resolve the foregoing technical problem, this application is implemented as follows:

In a first aspect, the embodiments of the present application provide a glass frame structure, which is defined in claim 1.

In a second aspect, the embodiments of the present application further provide a wearable device, which is defined in claim 13.

Further advantageous embodiments of the present disclosure are indicated in the dependent claims. It is to be understood that both the foregoing general description and the following detailed description are exemplary only, and are not restrictive of the present disclosure.

### BRIEF DESCRIPTION OF DRAWINGS

FIG. 1 is a schematic diagram of a glass frame structure according to an embodiment of the present application;
FIG. 2 is a partial schematic diagram 1 of a glass frame structure according to an embodiment of the present application;
FIG. 3 is a partial schematic diagram 2 of a glass frame structure according to an embodiment of the present application;
FIG. 4 is a sectional view of A-A direction in FIG. 3;
FIG. 5 is a sectional view in which a limiting member is in a second position in B-B direction in FIG. 3; and
FIG. 6 is a sectional view in which a limiting member is in a first position in B-B direction in FIG. 3.

Reference numerals in the accompanying drawings are as follows:
1. Nose pad;
20. Fixing plate;
21. First hook body; 211. First hook portion; 212. Connecting column;
22. Bent portion; 221. Second hook body;
23. Gap;
3. Glass frame body;
31. Installation frame; 32. First glass leg; 33. Second glass leg;
301. First mounting plate; 302. First through hole; 303. Second mounting plate; 304. Second through hole; 305. Limiting groove; 306. Mounting column; 307. Mounting groove; 308. Third through hole;
4. Glass frame front shell;
5. Limiting member; 51. Second hook portion;
6. Elastic member;
7. Fixing piece; 71. First limiting portion; 72. Second limiting portion.

### DESCRIPTION OF EMBODIMENTS

Exemplary embodiments of the present application will be described below in further detail with reference to the accompanying drawings. Although the exemplary embodiments of the present application are shown in the accompanying drawings, it should be understood that the present application may be implemented in various forms without being limited to the embodiments described herein. On the contrary, these embodiments are provided to enable a more thorough understanding of the present application and to fully convey the scope of the present application to those skilled in the art, whereby the scope of protection is defined in the claims.

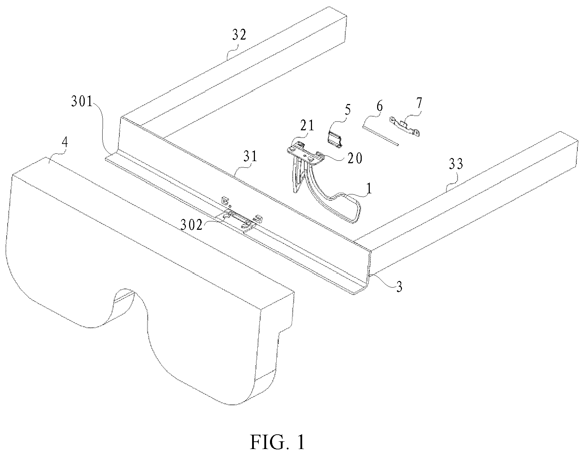

As shown in FIG. 1, the embodiments of the present application provide a glass frame structure, including: a nose pad 1, a limiting member 5, and a glass frame body 3.

The nose pad 1 is provided with one of a hook structure and a slot structure; the glass frame body 3 is provided with another of the hook structure and the slot structure.

The limiting member 5 is located at a first position or a second position, wherein in a case that the limiting member 5 is located at the first position, the limiting member 5 avoids the hook structure and the hook structure is located in the slot structure and is movable within the slot structure; and in a case that the limiting member is at the second position, the limiting member abuts against the hook structure and the hook structure is locked in the slot structure.

Optionally, the glass frame structure may further include: a glass frame front shell 4, and the glass frame front shell 4 is connected to the glass frame body 3.

Optionally, the glass frame body 3 may include: a mounting frame 31, a first glass leg 32, and a second glass leg 33; wherein the first glass leg 32 is connected to a first end of the mounting frame 31, and the second glass leg 33 is connected to a second end of the mounting frame 31, and the first glass leg 32 and the second glass leg 33 are used to be worn on the ears.

In the embodiments, the nose pad 1 and the glass frame body 3 are connected through a hook structure and a slot structure, to ensure that the nose pad 1 is detachable relative to the glass frame body 3 and the nose pad 1 can be replaced, so that the same glass frame body 3 can be compatible with different types of nose pads 1 and can be applied for different users to wear. In a case that the nose pad 1 is installed on the glass frame body 3, the movement of the nose pad 1 relative to the glass frame body 3 can also be restricted by the limiting member 5. While the nose pad 1 is detachable relative to the glass frame body 3, installation reliability between the nose pad 1 and the glass frame body 3 is also ensured.

Optionally, the nose pad 1 can be provided with the hook structure and the glass frame body 3 can be provided with the slot structure, or the nose pad 1 can be provided with the slot structure and the glass frame body 3 can be provided with the slot structure, or the nose pad 1 and the glass frame body 3 can be detachable from each other through a cooperation structure of a chute and a slider. The embodiments of the present application are not limited thereto.

In the following, for example, the nose pad 1 is provided with the hook structure and the glass frame body 3 is provided with the slot structure:
the hook structure includes: a fixing plate 20 and a first hook body 21. A first surface of the fixing plate 20 is connected to the nose pad 1; and the first hook body 21 is disposed on a second surface of the fixing plate 20; where the first surface and the second surface are provided opposite to each other.

The slot structure includes: a first through hole 302 opened on a first mounting plate 301 of the glass frame body 3.

In a case that the limiting member 5 is located at the first position, the limiting member 5 avoids the fixing plate 20 and the first hook body 21 is located in the first through hole 302 and is movable in the first through hole 302; and in a case that the limiting member 5 is at the second position, the limiting member 5 abuts against the fixing plate 20 and the first hook body 21 is locked in the first through hole 302.

Optionally, the mounting frame 31 includes the first mounting plate 301, and the first mounting plate 301 is used to install the nose pad 1, and the nose pad 1 is used to be worn on the nose.

In the embodiments, the nose pad 1 and the glass frame body 3 are connected through cooperation of the first hook body 21 and the first through hole 302, to ensure that the nose pad 1 is detachable relative to the glass frame body 3 and the nose pad 1 can be replaced, so that the same glass frame body 3 can be compatible with different types of nose pads 1 and can be applied for different users to wear. Moreover, through the cooperative connection between the first hook body 21 and the first through hole 302, less space is occupied, which can avoid excessive increase in the volume of the glass frame structure.

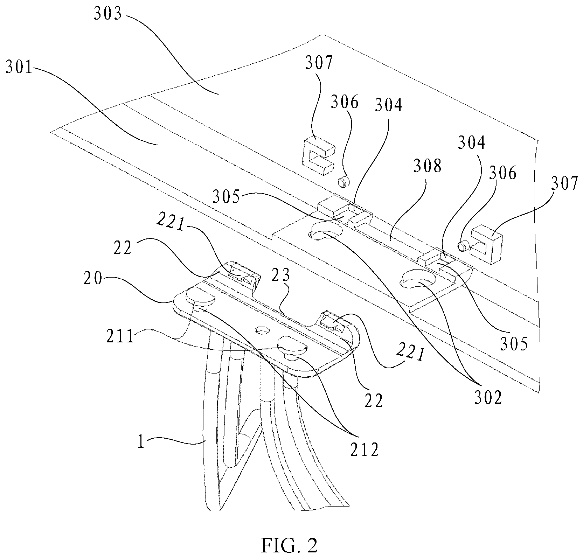

As shown in FIG. 2, the first hook body 21 may be in the shape of a "mushroom head", and the first hook body 21 may include: a first hook portion 211 and a connecting column 212.

The nose pad 1 is arranged on the first surface of the fixing plate 20, the first end of the connecting column 212 is connected with the second surface of the fixing plate 20, and the first hook portion 211 is connected with the second end of the connecting column 212. The first hook portion 211 passes through the first through hole 302 along a direction from a first surface of the first mounting plate 301 to a second surface of the first mounting plate 301, and is fastened on the second surface of the first mounting plate 301. The first surface and the second surface are opposite to each other.

In this way, the first hook body 21 in the shape of a "mushroom head" can be locked on the second surface of the first mounting plate 301 through the first hook portion 211, so as to limit the left and right rotation of the nose pad 1 and limit the fall out of the nose pad 1 in the vertical direction (that is, the direction from the first surface to the second surface).

It should be noted that FIG. 2 shows an example in which the glass frame structure is provided with two first hook bodies 21 and a first through hole 302. Of course, in the embodiments of the present application, the numbers of the first hook bodies 21 and the first through holes 302 are not limited thereto.

In this embodiment, the first hook portion 211 and the nose pad 1 are arranged on opposite surfaces of the fixing plate 20 respectively, so that the first hook portion 211 can pass through the first surface and the second surface of the first mounting plate 301 and clamped on the second surface, to realize the clamping between the nose pad 1 and the glass frame body 3. Besides, the structure is simple and easy to disassemble and install; and through the clamping between the nose pad 1 and the glass frame body 3, the detachable connection between the nose pad 1 and the glass frame body 3 can be implemented without increasing the volume, so as to ensure that the same frame body 3 can be compatible with different types of nose pads, and can be worn by different users.

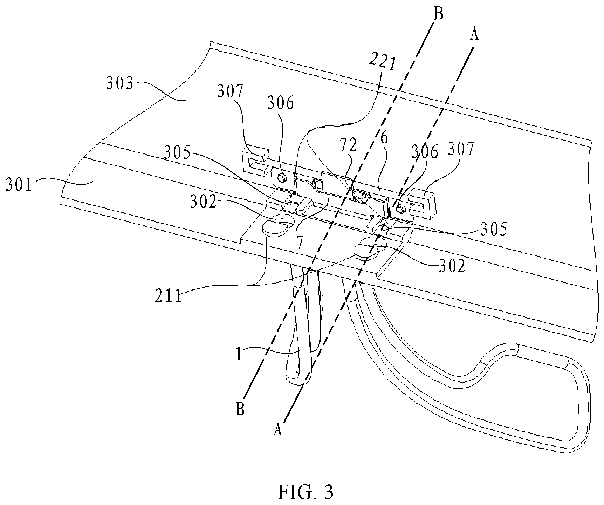

As shown in FIG. 2 and FIG. 3, the first through hole 302 includes a first portion and a second portion.

A first size of the first portion along the first direction is larger than a second size of the second portion along the first direction, a third size of the first hook portion 211 along the first direction is larger than the second size, and a fourth size of the connecting column 212 along the first direction is smaller than the second size;
wherein after the first hook portion 211 passes through the first portion along the direction from the first surface of the first mounting plate 301 to the second surface of the first mounting plate, the first hook portion moves to the second portion and is fastened on the second surface.

In this embodiment, the first portion of the first through hole 302 fits the first hook portion 211, so that the first hook portion 211 can be vertically inserted into the first portion of the first through hole 302; the second portion of the first through hole 302 is used to fit the part of the connecting column 212, so that when the first hook portion 211 passes through the first portion and moves to the second portion, the first hook portion 211 locks the connecting column 212 except the position where the first portion communicates with the second portion, to prevent the nose pad 1 from shaking.

Optionally, the first direction may be radial, for example: the diameter of the first portion is larger than the diameter of the second portion; the diameter of the first hook portion 211 is larger than the diameter of the second portion and smaller than the diameter of the first portion. In this way, the first hook portion 211 can pass through the first portion from the first surface of the fixing plate 20 to reach the second surface, and be clamped within the second portion on the second surface of the fixing plate 20.

Optionally, the diameter of the connecting column 212 is smaller than the diameter of the second portion, which can ensure that the connecting column 212 can be located in the second part, so that the first hook portion 211 can be clamped on the second surface of the first mounting plate 301.

It should be noted that the diameter in the embodiments of the present application do not limit that the shapes of the first portion, the second portion and the first hook portion 211 are a circle or an arc, and it can also be a square, an ellipse, etc., and the diameter can also be broadly understood as the circumcircle diameter of a square, etc.

Optionally, one of the second hook body and the second through hole is further diposed on the fixing plate 20. The second mounting plate 303 of the glass frame body 3 is provided with the other of the second hook body and the second through hole; wherein the first mounting plate 301 and the second mounting plate 303 are arranged in a predetermined angle, and when the fixing plate 20 is installed on the glass frame body 3, the second hook body is locked in the second through hole.

In this embodiment, the nose pad 1 is clamped on the plane of the first mounting plate 301 of the glass frame body 3 through the first hook body 21 and the first through hole 302. On this basis, the second hook body and the second through hole implement that the nose pad 1 is clamped on the second mounting plate 303 arranged at a preset angle with the first mounting plate 301, so as to ensure that the connection between the nose pad 1 and the glass frame body 3 is more stable and improve the connection reliability.

Optionally, the fixing plate 20 may be provided with the second hook body and the glass frame body 3 may be provided with the second through hole, or the fixing plate 20 may be provided with the second through hole and the glass frame body 3 may be provided with the second hook body, which is not limited in this embodiment of the present application.

In the following, for example, the fixing plate 20 is provided with the second hook body 221 and the glass frame body 3 is provided with the second through hole 304.

As shown in FIG. 2 to FIG. 4, the hook structure further includes: a second hook body 221, where the second hook body 221 is located on the second surface of the fixing plate 20.

As claimed, the slot structure further includes: a second through hole 304 opened on the second mounting plate 303 of the glass frame body 3; wherein the first mounting plate 301 and the second mounting plate 303 are arranged at a preset angle.

In a case that the limiting member 5 is located at the first position, the limiting member 5 avoids the fixing plate 20 and the second hook body 221 is located in the second through hole 304 and is movable in the second through hole 304; and in a case that the limiting member 5 is at the second position, the limiting member 5 abuts against the fixing plate 20 and the second hook body 221 is locked in the second through hole 304.

Optionally, the fixing plate 20 includes a bent portion 22 bent toward the second surface of the fixing plate 20, and the second hook body 221 is disposed on the bent portion 22.

The first surface of the fixing plate 20 is arranged opposite to the side where the nose pad 1 is located; for example: the second hook body 221 can be arranged on a side of the bent portion 22 facing the first hook body 21. The slot structure includes a second through hole 304 opened on the second mounting plate 303; for example: the second through hole 304 can be provided at the connecting position between the first mounting plate 301 and the second mounting plate 303. Specifically, the location of the second through hole 304 may be determined according to the height of the bent portion 22 and the location of the second hook body 221 on the bent portion 22, which is not limited in the embodiments of the present application.

The second hook body 221 passes through the second through hole 304 along a direction from a first surface of the second mounting plate 303 to a second surface of the second mounting plate 303; the first surface of the second mounting plate 303 is connected to the first surface of the first mounting plate 301, and the second surface of the second mounting plate 303 is connected to the second surface of the first mounting plate 301.

Optionally, the first mounting plate 301 and the second mounting plate 303 may be integrally formed, or the second mounting plate 303 may also be formed by bending a part of the first mounting plate 301 toward the second surface.

It should be noted that FIG. 2 and FIG. 3 show an example in which the glass frame structure is provided with two second hook bodies 221 and a second through hole 304. Of course, in the embodiments of the present application, the numbers of the second hook bodies 221 and the second through holes 304 are not limited thereto.

Optionally, the first surface of the first mounting plate 301 is provided with a limiting groove 305, and the opening of the limiting groove 305 is set opposite to the second through hole 304; wherein the second hook body 221 pass through the second through hole 304 and be locked in the limiting groove 305.

It should be noted that an example of the limiting groove 305 is shown in FIG. 2 and FIG. 3. Of course, the limiting groove 305 can also be in other forms, for example, the limiting groove 305 can be a closed groove with an opening, where the opening is provided around the second through hole 304, so that when the second hook body 221 passes through the second through hole 304 and is locked in the limiting groove 305, the limiting groove 305 locks the second hook body 221 to prevent the second hook body 221 from shaking, thereby further improving the reliability of the connection between the nose pad 1 and the glass frame body 3.

As shown in FIG. 1 and FIG. 3, the glass frame structure further includes: a fixing piece 7, wherein the fixing piece 7 is fixedly connected to the second mounting plate 303 of the glass frame body 3, an accommodation space is formed between the fixing piece 7 and the second mounting plate 303, and at least a portion of the limiting member 5 is located within the accommodation space.

Optionally, a mounting column 306 may be disposed on the second mounting plate 303; a mounting hole corresponding to the mounting column 306 may be disposed on the fixing plate 7. The mounting column 306 is penetrated in the mounting hole to realize the fixing of the fixing piece 7 and the second mounting plate 303. For example: the fixing piece 7 can be riveted with the mounting column 306, of course, this embodiment of the present application is not limited thereto.

Optionally, the mounting column 306 may include a first mounting column and a second mounting column; a first mounting hole and a second mounting hole are disposed on the fixing piece 7, and the first mounting hole is located at the first end of the fixing piece 7, and arranged corresponding to the first mounting column; the second mounting hole is located at the second end of the fixing piece 7, and arranged corresponding to the second mounting column.

Optionally, the fixing piece 7 is provided with a first limiting portion 71; wherein in a case that the limiting member 5 is at the first position, the limiting member 5 is away from the first limiting portion 71; in a case that the limiting member 5 is at the second position, the limiting member 5 abuts against the first limiting portion 71.

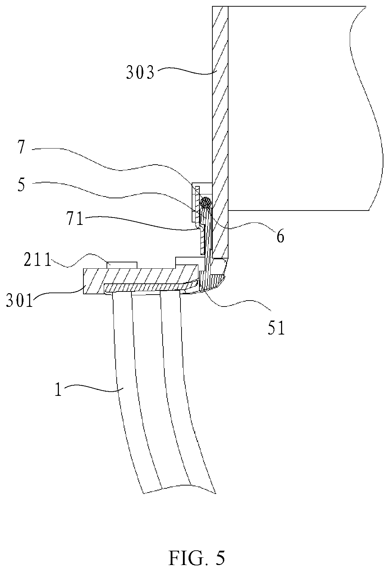

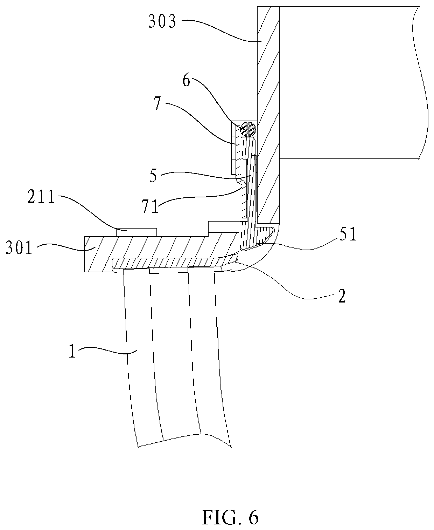

As shown in FIG. 5 and FIG. 6, the fixing piece 7 includes a first fixing portion, a second fixing portion, and a first limiting portion 71 connected between the first fixing portion and the second fixing portion. Specifically, the first end of the first limiting portion 71 is connected to the first fixing portion, and the first predetermined angle is formed between the first limiting portion 71 and the first fixing portion; the second end of the first limiting portion 71 is connected to the second fixing portion, and a second preset angle is formed between the first limiting portion 71 and the second fixing portion; the first fixing portion and the second fixing portion extend in opposite directions relative to the connecting portion.

In this way, when the fixing piece 7 is installed on the second mounting plate 303, the first fixing portion is arranged close to the first mounting plate 301, and the distance between the first fixing portion and the second mounting plate 303 is smaller than the distance between the second fixing portion and the second mounting plate 303, to ensure that the limiting member 5 is movable in the accommodation space.

The corresponding limiting member 5 is also provided with a recess matching the first limiting portion 71, so that in a case that the limiting member 5 is at the second position, the limiting member 5 and the first limiting portion 71 abut to prevent the limiting member 5 from coming out, thereby improving the locking reliability of the limiting member 5.

Optionally, the glass frame structure further includes: an elastic member 6, wherein a first end and a second end of the elastic member 6 are respectively connected to the second mounting plate 303; and the first end of the limiting member 5 is located in the accommodation space and connected to the elastic member 6;
where in a case that the limiting member 5 is at the first position, the elastic member 6 is in a first state, and the second end of the limiting member 5 avoids the fixing plate 20; in a case that the limiting member 5 is at the second position, the elastic member 6 is in a second state, and the second end of the limiting member 5 abuts against the fixing plate 20.

Optionally, the elastic member 6 can be a spring, a leaf spring or other elastic components.

Optionally, the second mounting plate 303 may also be provided with a mounting groove 307, and the elastic member 6 may be disposed in the mounting groove 307. For example: the second mounting plate 303 is provided with a first mounting groove and a second mounting groove, and the first end of the elastic member 6 is fixed in the first mounting groove, and the second end of the elastic member 6 is fixed in the second mounting groove. In this way, the middle part of the elastic member 6 between the first end and the second end can elastically compress the limiting member 5. In a natural state (or elastic recovery state) of the elastic member 6, the elastic member 6 abuts against the limiting member 5 to prevent the limiting member 5 from coming out.

Optionally, the fixing piece 7 is provided with a second limiting portion 72, and the elastic member 6 is located between the second limiting portion 72 and the second mounting plate 303.

Optionally, the middle part of the elastic member 6 between the first end and the second end is located between the second limiting portion 72 and the second mounting plate 303, and the second limiting portion 72 is used to limit the elastic member 6 in the horizontal direction (the left-right direction as shown in FIG. 5 and FIG. 6 ), to prevent the elastic member 6 from coming out.

Optionally, a locking mechanism is formed by the fixing piece 7, the limiting member 5 and the elastic member 6; and the locking mechanism has a locked state and an unlocked state. The locked state is a state in which the limiting member 5 is located at the second position, and the unlocked state is a state in which the limiting member 5 is located at the first position.

The locking mechanism can be arranged on the first surface of the second mounting plate 303 or on the second surface of the second mounting plate 303.

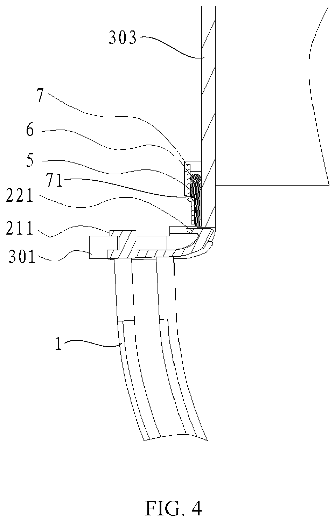

For example: when the locking mechanism is disposed on the second surface of the second mounting plate 303, as shown in FIG. 4, the first mounting plate 301 is further provided with a third through hole 308.

In a case that the limiting member 5 is at the first position, the limiting member 5 is away from the third through hole 308; and in a case that the limiting member 5 is at the second position, at least a portion of the limiting member 5 is located in the third through hole 308 and abuts against the fixing plate 20.

In this embodiment, the third through hole 308 is opened on the first mounting plate 301, to ensure that the limiting member 5 can pass through the first mounting plate 301 to abut against the fixing plate 20, thereby locking the fixing plate 20. That is, the nose pad 1 is limited to move relative to the glass frame body 3.

Specifically, the fixing piece 7 is fixed on the second surface of the second mounting plate 303, and forms the accommodation space with the second surface of the second mounting plate 303. A notch 23 is also disposed on the fixing plate 20; when the hook structure is located in the slot structure, the third through hole 308 is provided opposite to the notch 23.

In a case that the limiting member 5 is located at the first position, the elastic member 6 is in the first state, and the limiting member 5 is away from the notch 23; in a case that the limiting member 5 is located at the second position, the elastic member 6 is in the second state, the second end of the limiting member 5 passes through the notch 23, and at least a portion of the limiting member 5 is in the third through hole 308.

In this embodiment, the notch 23 is disposed on the fixing plate 20, and when the limiting member 5 passes through the first mounting plate 301, the limiting member 5 partially abuts against the notch 23, so that the limiting member 5 locks the fixing plate 20. That is, while restricting the movement of the nose pad 1 relative to the glass frame body 3, this can also reduce the increased volume of the glass frame structure.

Optionally, the second end of the limiting member 5 is provided with a second hook portion 51, the second hook portion 51 is located in the third through hole 308, and in a case that the limiting member 5 is located at the first position, the second hook portion 51 abuts against an inner wall of the third through hole 308.

In this embodiment, in a case that the limiting member 5 is at the first position, the second hook portion 51 is locked on an inner wall of the third through hole 308, to ensure that the second end of the limiting member 5 can be located in the third through hole 308, to prevent the limiting member 5 from coming out when the nose pad 1 is removed or replaced.

Optionally, a locking mechanism is formed by the fixing piece 7, the limiting member 5 and the elastic member 6; and the locking mechanism has a locked state and an unlocked state. The locked state is a state in which the limiting member 5 is located at the second position, and the unlocked state is a state in which the limiting member 5 is located at the first position.

When the nose pad 1 needs to be installed, the locking mechanism may be moved (for example, the limiting member 5 is moved) by an external force, to make the locking mechanism at a position of the unlocked state shown in FIG. 6 (that is, the limiting member 5 is at the first position). In this way, the first hook body 21 can be clamped in the first through hole 302, and the second hook body 221 can be clamped in the second through hole 304 to realize the installation of the nose pad 1. In this case, the force acted on the locking mechanism may be released, so that the locking mechanism restores to the position of the locked state shown in FIG. 5, thereby realizing the locking of the fixing plate 20 (for example, limiting the movement of the fixing plate 20 in the left and right direction in FIG. 5), to prevent the fixing plate 20 from slipping out.

When it is necessary to take out or replace the nose pad 1, the locking mechanism can be moved by an external force to make the locking mechanism at the position of the unlocked state shown in FIG. 6. In this way, the first hook body 21 may slide out of the first through hole 302 to detach from locking, and the second hook body 221 slides out of the second through hole 304, so that the nose pad 1 is separated from the glass frame body 3. At this time, the replaced nose pad 1 can be installed on the glass frame body 3 (the process is as described above and is not repeated herein). After the replacement, the force acted on the locking mechanism can be released to restore the locking mechanism to the position of the locked state shown in FIG. 5, so as to realize the locking of the fixing plate 20 and prevent the fixing plate 20 from sliding out.

Optionally, the embodiments of the present application further provide a wearable electronic device, including the glass frame structure as described above. The wearable electronic device may be augmented reality (Augmented Reality, AR) glasses, virtual reality (Virtual Reality, VR) glasses, etc., and this embodiment of the present application is not limited thereto.

Of course, the glass frame structure in the above embodiments of the present application can also be applied to common glasses, such as myopia glasses, hyperopia glasses, decorative glasses, etc., and the embodiments of the present application are not limited thereto.

In the above solution, when the user has different types of nose pads to wear, the second end (the second hook portion 51) of the limiting member 5 may be pressed, so that the limiting member 5 can be switched from the second position to the first position, that is, the locking mechanism switches from the locked state to the unlocked state, and then the nose pad 1 can be slid out to remove the nose pad 1. At the same time, the second end of the limiting member 5 can be pressed and slided into the nose pad 1 to realize the installation of the nose pad 1. This realizes the replaceability of the nose pad 1, so as to ensure that one glass frame structure can be compatible with different types of requirements of the nose pad 1 of users, and the structural features occupy small space.

## Claims

1. A glass frame structure, **characterized by** comprising:
a nose pad (1), wherein the nose pad (1) is provided with one of a hook structure and a slot structure;
a glass frame body (3), wherein the glass frame body (3) is provided with another of the hook structure and the slot structure; and
a limiting member (5), wherein the limiting member (5) is located at a first position or a second position; wherein
in a case that the limiting member (5) is located at the first position, the limiting member (5) avoids the hook structure and the hook structure is located in the slot structure and is movable within the slot structure; and in a case that the limiting member (5) is at the second position, the limiting member (5) abuts against the hook structure and the hook structure is locked in the slot structure;
wherein the hook structure comprises:
a fixing plate (20), wherein a first surface of the fixing plate (20) is connected to the nose pad (1); and
a first hook body (21), disposed on a second surface of the fixing plate (20); wherein the first surface and the second surface are provided opposite to each other; and
the slot structure comprises: a first through hole (302) opened on a first mounting plate (301) of the glass frame body (3); wherein
in a case that the limiting member (5) is at the first position, the limiting member (5) avoids the fixing plate (20) and the first hook body (21) is located in the first through hole (302) and is movable in the first through hole (302); and in a case that the limiting member (5) is at the second position, the limiting member (5) abuts against the fixing plate (20), and the first hook body (21) is locked inside the first through hole (302).

2. The glass frame structure according to claim 1, wherein the first hook body (21) comprises:
a connecting column (212), wherein a first end of connecting column (212) is connected to the second surface of the fixing plate (20); and
a first hook portion (211); wherein the first hook portion (211) is connected to a second end of the connecting column (212); wherein
the first hook portion (211) passes through the first through hole (302) along a direction from a first surface of the first mounting plate (301) to a second surface of the first mounting plate (301), and is fastened on the second surface of the first mounting plate (301).

3. The glass frame structure according to claim 2, wherein the first through hole (302) comprises a first portion and a second portion; wherein
a first size of the first portion along the first direction is larger than a second size of the second portion along the first direction, a third size of the first hook portion (211) along the first direction is larger than the second size, the third size is smaller than the first size, and a fourth size of the connecting column (212) along the first direction is smaller than the second size; wherein
after the first hook portion (211) passes through the first portion along the direction from the first surface of the first mounting plate (301) to the second surface of the first mounting plate (301), the first hook portion (211) moves to the second portion and is fastened on the second surface.

4. The glass frame structure according to claim 1, wherein the hook structure further comprises:
a second hook body (221), wherein the second hook body (221) is located on the second surface of the fixing plate (20); and
the slot structure further includes: a second through hole (304) opened on the second mounting plate (303) of the glass frame body (3); wherein the first mounting plate (301) and the second mounting plate (303) are arranged at a preset angle; wherein
in a case that the limiting member (5) is at the first position, the limiting member (5) avoids the fixing plate (20) and the second hook body (221) is located in the second through hole (304) and is movable in the second through hole (304); and in a case that the limiting member (5) is at a second position, the limiting member (5) abuts against the fixing plate (20), and the second hook body (221) is locked inside the second through hole (304).

5. The glass frame structure according to claim 4, wherein the fixing plate (20) includes a bent portion (22) bent toward the second surface of the fixing plate (20), and the second hook body (221) is disposed on the bent portion (22); wherein
the second hook body (221) passes through the second through hole (304) along a direction from a first surface of the second mounting plate (303) to a second surface of the second mounting plate (303); the first surface of the second mounting plate (303) is connected to the first surface of the first mounting plate (301), and the second surface of the second mounting plate (303) is connected to the second surface of the first mounting plate (301).

6. The glass frame structure according to claim 5, wherein the first surface of the first mounting plate (301) is provided with a limiting groove (305), and an opening of the limiting groove (305) is provided opposite to the second through hole (304); wherein
the second hook body (221) passes through the second through hole (304) and is fastened in the limiting groove (305).

7. The glass frame structure according to claim 1, further comprising:
a fixing piece (7), wherein the fixing piece (7) is fixedly connected to the second mounting plate (303) of the glass frame body (3), an accommodation space is formed between the fixing piece (7) and the second mounting plate (303), and at least a portion of the limiting member (5) is located within the accommodation space.

8. The glass frame structure according to claim 7, wherein a first limiting portion (71) is disposed on the fixing piece (7); wherein
in a case that the limiting member (5) is at the first position, the limiting member (5) is away from the first limiting portion (71); in a case that the limiting member (5) is at the second position, the limiting member (5) abuts against the first limiting portion (71).

9. The glass frame structure according to claim 7, further comprising:
an elastic member (6), wherein a first end and a second end of the elastic member (6) are respectively connected to the second mounting plate (303); and the first end of the limiting member (5) is located in the accommodation space and connected to the elastic member (6); wherein
in a case that the limiting member (5) is at the first position, the elastic member (6) is in a first state, and the second end of the limiting member (5) avoids the fixing plate (20); in a case that the limiting member (5) is at the second position, the elastic member (6) is in a second state, and the second end of the limiting member (5) abuts against the fixing plate (20).

10. The glass frame structure according to claim 9, wherein a second limiting portion (72) is disposed on the fixing piece (7), and the elastic member (6) is located between the second limiting portion (72) and the second mounting plate (303).

11. The glass frame structure according to claim 1, wherein a third through hole (308) is also disposed on the first mounting plate (301); wherein
in a case that the limiting member (5) is at the first position, the limiting member (5) is away from the third through hole (308); and in a case that the limiting member (5) is at the second position, at least a portion of the limiting member (5) is located in the third through hole (308) and abuts against the fixing plate (20).

12. The glass frame structure according to claim 11, wherein a second end of the limiting member (5) is provided with a second hook portion (51), the second hook portion (51) is located in the third through hole (308), and in a case that the limiting member (5) is located at the first position, the second hook portion (51) abuts against an inner wall of the third through hole (308).

13. A wearable device, comprising the glass frame structure according to any one of claims 1 to 12.

## Patentansprüche

1. Eine Brillenrahmenstruktur, **dadurch gekennzeichnet, dass** sie Folgendes beinhaltet:
ein Nasenpad (1), wobei das Nasenpad (1) mit einer von einer Hakenstruktur und einer Schlitzstruktur versehen ist;
einen Brillenrahmenkörper (3), wobei der Brillenrahmenkörper (3) mit einer anderen von der Hakenstruktur und der Schlitzstruktur versehen ist; und
ein Begrenzungselement (5), wobei sich das Begrenzungselement (5) an einer ersten Position oder einer zweiten Position befindet; wobei
in einem Fall, dass sich das Begrenzungselement (5) an der ersten Position befindet, das Begrenzungselement (5) die Hakenstruktur umgeht und sich die Hakenstruktur in der Schlitzstruktur befindet und innerhalb der Schlitzstruktur beweglich ist; und in einem Fall, dass das Begrenzungselement (5) an der zweiten Position liegt, das Begrenzungselement (5) an der Hakenstruktur anliegt und die Hakenstruktur in der Schlitzstruktur verriegelt ist;
wobei die Hakenstruktur Folgendes beinhaltet:
eine Befestigungsplatte (20), wobei eine erste Oberfläche der Befestigungsplatte (20) mit dem Nasenpad (1) verbunden ist; und
einen ersten Hakenkörper (21), der auf einer zweiten Oberfläche der Befestigungsplatte (20) angeordnet ist; wobei die erste Oberfläche und die zweite Oberfläche einander gegenüberliegend bereitgestellt sind; und
die Schlitzstruktur Folgendes beinhaltet: ein erstes Durchgangsloch (302), das auf einer ersten Montageplatte (301) des Brillenrahmenkörpers (3) geöffnet ist; wobei
in einem Fall, dass das Begrenzungselement (5) an der ersten Position liegt, das Begrenzungselement (5) die Befestigungsplatte (20) umgeht und sich der erste Hakenkörper (21) in dem ersten Durchgangsloch (302) befindet und in dem ersten Durchgangsloch (302) beweglich ist; und in einem Fall, dass das Begrenzungselement (5) an der zweiten Position liegt, das Begrenzungselement (5) an der Befestigungsplatte (20) anliegt und der erste Hakenkörper (21) innerhalb des ersten Durchgangslochs (302) verriegelt ist.

2. Brillenrahmenstruktur gemäß Anspruch 1, wobei der erste Hakenkörper (21) Folgendes beinhaltet:
eine Verbindungssäule (212), wobei ein erstes Ende der Verbindungssäule (212) mit der zweiten Oberfläche der Befestigungsplatte (20) verbunden ist; und
einen ersten Hakenabschnitt (211); wobei der erste Hakenabschnitt (211) mit einem zweiten Ende der Verbindungssäule (212) verbunden ist; wobei
der erste Hakenabschnitt (211) durch das erste Durchgangsloch (302) entlang einer Richtung von einer ersten Oberfläche der ersten Montageplatte (301) zu einer zweiten Oberfläche der ersten Montageplatte (301) verläuft und auf der zweiten Oberfläche der ersten Montageplatte (301) fixiert ist.

3. Brillenrahmenstruktur gemäß Anspruch 2, wobei das erste Durchgangsloch (302) einen ersten Abschnitt und einen zweiten Abschnitt beinhaltet; wobei
eine erste Abmessung des ersten Abschnitts entlang der ersten Richtung größer als eine zweite Abmessung des zweiten Abschnitts entlang der ersten Richtung ist, eine dritte Abmessung des ersten Hakenabschnitts (211) entlang der ersten Richtung größer als die zweite Abmessung ist, die dritte Abmessung kleiner als die erste Abmessung ist und eine vierte Abmessung der Verbindungssäule (212) entlang der ersten Richtung kleiner als die zweite Abmessung ist; wobei
nachdem der erste Hakenabschnitt (211) durch den ersten Abschnitt entlang der Richtung von der ersten Oberfläche der ersten Montageplatte (301) zu der zweiten Oberfläche der ersten Montageplatte (301) verläuft, sich der erste Hakenabschnitt (211) zu dem zweiten Abschnitt bewegt und auf der zweiten Oberfläche fixiert ist.

4. Brillenrahmenstruktur gemäß Anspruch 1, wobei die Hakenstruktur ferner Folgendes beinhaltet:
einen zweiten Hakenkörper (221), wobei sich der zweite Hakenkörper (221) auf der zweiten Oberfläche der Befestigungsplatte (20) befindet; und
die Schlitzstruktur ferner Folgendes umfasst: ein zweites Durchgangsloch (304), das auf der zweiten Montageplatte (303) des Brillenrahmenkörpers (3) geöffnet ist; wobei die erste Montageplatte (301) und die zweite Montageplatte (303) in einem voreingestellten Winkel angeordnet sind; wobei
in einem Fall, dass das Begrenzungselement (5) an der ersten Position liegt, das Begrenzungselement (5) die Befestigungsplatte (20) umgeht und sich der zweite Hakenkörper (221) in dem zweiten Durchgangsloch (304) befindet und in dem zweiten Durchgangsloch (304) beweglich ist; und in einem Fall, dass das Begrenzungselement (5) an einer zweiten Position liegt, das Begrenzungselement (5) an der Befestigungsplatte (20) anliegt und der zweite Hakenkörper (221) innerhalb des zweiten Durchgangslochs (304) verriegelt ist.

5. Brillenrahmenstruktur gemäß Anspruch 4, wobei die Befestigungsplatte (20) einen gebogenen Abschnitt (22) umfasst, der in Richtung der zweiten Oberfläche der Befestigungsplatte (20) gebogen ist, und der zweite Hakenkörper (221) auf dem gebogenen Abschnitt (22) angeordnet ist; wobei
der zweite Hakenkörper (221) durch das zweite Durchgangsloch (304) entlang einer Richtung von einer ersten Oberfläche der zweiten Montageplatte (303) zu einer zweiten Oberfläche der zweiten Montageplatte (303) verläuft; die erste Oberfläche der zweiten Montageplatte (303) mit der ersten Oberfläche der ersten Montageplatte (301) verbunden ist und die zweite Oberfläche der zweiten Montageplatte (303) mit der zweiten Oberfläche der ersten Montageplatte (301) verbunden ist.

6. Brillenrahmenstruktur gemäß Anspruch 5, wobei die erste Oberfläche der ersten Montageplatte (301) mit einer Begrenzungsnut (305) versehen ist und eine Öffnung der Begrenzungsnut (305) gegenüber dem zweiten Durchgangsloch (304) bereitgestellt ist; wobei
der zweite Hakenkörper (221) durch das zweite Durchgangsloch (304) verläuft und in der Begrenzungsnut (305) fixiert ist.

7. Brillenrahmenstruktur gemäß Anspruch 1, die ferner Folgendes beinhaltet:
ein Befestigungsstück (7), wobei das Befestigungsstück (7) fest mit der zweiten Montageplatte (303) des Brillenrahmenkörpers (3) verbunden ist, ein Aufnahmeraum zwischen dem Befestigungsstück (7) und der zweiten Montageplatte (303) gebildet ist und sich mindestens ein Abschnitt des Begrenzungselements (5) innerhalb des Aufnahmeraums befindet.

8. Brillenrahmenstruktur gemäß Anspruch 7, wobei ein erster Begrenzungsabschnitt (71) auf dem Befestigungsstück (7) angeordnet ist; wobei
in einem Fall, dass das Begrenzungselement (5) an der ersten Position liegt, das Begrenzungselement (5) von dem ersten Begrenzungsabschnitt (71) entfernt ist; in einem Fall, dass das Begrenzungselement (5) an der zweiten Position liegt, das Begrenzungselement (5) an dem ersten Begrenzungsabschnitt (71) anliegt.

9. Brillenrahmenstruktur gemäß Anspruch 7, die ferner Folgendes beinhaltet:
ein elastisches Element (6), wobei ein erstes Ende und ein zweites Ende des elastischen Elements (6) jeweils mit der zweiten Montageplatte (303) verbunden sind;
und sich das erste Ende des Begrenzungselements (5) in dem Aufnahmeraum befindet und mit dem elastischen Element (6) verbunden ist; wobei
in einem Fall, dass das Begrenzungselement (5) an der ersten Position liegt, das elastische Element (6) in einem ersten Zustand ist und das zweite Ende des Begrenzungselements (5) die Befestigungsplatte (20) umgeht; in einem Fall, dass das Begrenzungselement (5) an der zweiten Position liegt, das elastische Element (6) in einem zweiten Zustand ist und das zweite Ende des Begrenzungselements (5) an der Befestigungsplatte (20) anliegt.

10. Brillenrahmenstruktur gemäß Anspruch 9, wobei ein zweiter Begrenzungsabschnitt (72) auf dem Befestigungsstück (7) angeordnet ist und sich das elastische Element (6) zwischen dem zweiten Begrenzungsabschnitt (72) und der zweiten Montageplatte (303) befindet.

11. Brillenrahmenstruktur gemäß Anspruch 1, wobei ein drittes Durchgangsloch (308) ebenfalls auf der ersten Montageplatte (301) angeordnet ist; wobei
in einem Fall, dass das Begrenzungselement (5) an der ersten Position liegt, das Begrenzungselement (5) von dem dritten Durchgangsloch (308) entfernt ist; und in einem Fall, dass das Begrenzungselement (5) an der zweiten Position liegt, sich mindestens ein Abschnitt des Begrenzungselements (5) in dem dritten Durchgangsloch (308) befindet und an der Befestigungsplatte (20) anliegt.

12. Brillenrahmenstruktur gemäß Anspruch 11, wobei ein zweites Ende des Begrenzungselements (5) mit einem zweiten Hakenabschnitt (51) versehen ist, sich der zweite Hakenabschnitt (51) in dem dritten Durchgangsloch (308) befindet und in einem Fall, dass sich das Begrenzungselement (5) an der ersten Position befindet, der zweite Hakenabschnitt (51) an einer Innenwand des dritten Durchgangslochs (308) anliegt.

13. Eine Wearable-Vorrichtung, die die Brillenrahmenstruktur gemäß einem der Ansprüche 1 bis 12 beinhaltet.

## Revendications

1. Une structure de monture de lunettes, **caractérisée en ce qu'**elle comprend :
une plaquette nasale (1), la plaquette nasale (1) étant pourvue d'un élément parmi une structure à crochet et une structure à fente ;
un corps de monture de lunettes (3), le corps de monture de lunettes (3) étant pourvu de l'autre élément parmi la structure à crochet et la structure à fente ; et
un organe de limitation (5), l'organe de limitation (5) étant situé à une première position ou à une deuxième position ; dans laquelle
dans le cas où l'organe de limitation (5) est situé à la première position, l'organe de limitation (5) évite la structure à crochet et la structure à crochet est située dans la structure à fente et est mobile au-dedans de la structure à fente ; et dans le cas où l'organe de limitation (5) est à la deuxième position, l'organe de limitation (5) bute contre la structure à crochet et la structure à crochet est bloquée dans la structure à fente ;
dans laquelle la structure à crochet comprend :
une plaque de fixation (20), une première surface de la plaque de fixation (20) étant reliée à la plaquette nasale (1) ; et
un premier corps à crochet (21), disposé sur une deuxième surface de la plaque de fixation (20) ; la première surface et la deuxième surface se trouvant à l'opposé l'une de l'autre ; et
la structure à fente comprend : un premier trou traversant (302) ouvert sur une première plaque de montage (301) du corps de monture de lunettes (3) ; dans laquelle dans le cas où l'organe de limitation (5) est à la première position, l'organe de limitation (5) évite la plaque de fixation (20) et le premier corps à crochet (21) est situé dans le premier trou traversant (302) et est mobile dans le premier trou traversant (302) ; et
dans le cas où l'organe de limitation (5) est à la deuxième position, l'organe de limitation (5) bute contre la plaque de fixation (20), et le premier corps à crochet (21) est bloqué à l'intérieur du premier trou traversant (302).

2. La structure de monture de lunettes selon la revendication 1, dans laquelle le premier corps à crochet (21) comprend :
une colonne de liaison (212), une première extrémité de la colonne de liaison (212) étant reliée à la deuxième surface de la plaque de fixation (20) ; et
une première portion crochet (211) ; la première portion crochet (211) étant reliée à une deuxième extrémité de la colonne de liaison (212) ; dans laquelle
la première portion crochet (211) passe à travers le premier trou traversant (302) dans une direction allant d'une première surface de la première plaque de montage (301) vers une deuxième surface de la première plaque de montage (301), et se cale sur la deuxième surface de la première plaque de montage (301).

3. La structure de monture de lunettes selon la revendication 2, dans laquelle le premier trou traversant (302) comprend une première portion et une deuxième portion ; dans laquelle
une première taille de la première portion dans la première direction est plus grande qu'une deuxième taille de la deuxième portion dans la première direction, une troisième taille de la première portion crochet (211) dans la première direction est plus grande que la deuxième taille, la troisième taille est plus petite que la première taille, et une quatrième taille de la colonne de liaison (212) dans la première direction est plus petite que la deuxième taille ; dans laquelle
après que la première portion crochet (211) est passée à travers la première portion dans la direction allant de la première surface de la première plaque de montage (301) vers la deuxième surface de la première plaque de montage (301), la première portion crochet (211) se déplace vers la deuxième portion et se cale sur la deuxième surface.

4. La structure de monture de lunettes selon la revendication 1, dans laquelle la structure à crochet comprend en outre :
un deuxième corps à crochet (221), le deuxième corps à crochet (221) étant situé sur la deuxième surface de la plaque de fixation (20) ; et
la structure à fente inclut en outre : un deuxième trou traversant (304) ouvert sur la deuxième plaque de montage (303) du corps de monture de lunettes (3) ; dans laquelle la première plaque de montage (301) et la deuxième plaque de montage (303) sont agencées en formant un angle prédéfini ; dans laquelle
dans le cas où l'organe de limitation (5) est à la première position, l'organe de limitation (5) évite la plaque de fixation (20) et le deuxième corps à crochet (221) est situé dans le deuxième trou traversant (304) et est mobile dans le deuxième trou traversant (304) ; et
dans le cas où l'organe de limitation (5) est à une deuxième position, l'organe de limitation (5) bute contre la plaque de fixation (20), et le deuxième corps à crochet (221) est bloqué à l'intérieur du deuxième trou traversant (304).

5. La structure de monture de lunettes selon la revendication 4, dans laquelle la plaque de fixation (20) inclut une portion coudée (22) coudée du côté de la deuxième surface de la plaque de fixation (20), et le deuxième corps à crochet (221) est disposé sur la portion coudée (22) ; dans laquelle
le deuxième corps à crochet (221) passe à travers le deuxième trou traversant (304) dans une direction allant d'une première surface de la deuxième plaque de montage (303) vers une deuxième surface de la deuxième plaque de montage (303) ; la première surface de la deuxième plaque de montage (303) est reliée à la première surface de la première plaque de montage (301), et la deuxième surface de la deuxième plaque de montage (303) est reliée à la deuxième surface de la première plaque de montage (301).

6. La structure de monture de lunettes selon la revendication 5, dans laquelle la première surface de la première plaque de montage (301) est pourvue d'une rainure de limitation (305), et une ouverture de la rainure de limitation (305) se trouve à l'opposé du deuxième trou traversant (304) ; dans laquelle
le deuxième corps à crochet (221) passe à travers le deuxième trou traversant (304) et se cale dans la rainure de limitation (305).

7. La structure de monture de lunettes selon la revendication 1, comprenant en outre :
une pièce de fixation (7), dans laquelle la pièce de fixation (7) est reliée de manière fixe à la deuxième plaque de montage (303) du corps de monture de lunettes (3), un espace de logement est formé entre la pièce de fixation (7) et la deuxième plaque de montage (303), et au moins une portion de l'organe de limitation (5) est située au-dedans de l'espace de logement.

8. La structure de monture de lunettes selon la revendication 7, dans laquelle une première portion de limitation (71) est disposée sur la pièce de fixation (7) ; dans laquelle
dans le cas où l'organe de limitation (5) est à la première position, l'organe de limitation (5) est écarté de la première portion de limitation (71) ; dans le cas où l'organe de limitation (5) est à la deuxième position, l'organe de limitation (5) bute contre la première portion de limitation (71).

9. La structure de monture de lunettes selon la revendication 7, comprenant en outre :
un organe élastique (6), dans laquelle une première extrémité et une deuxième extrémité de l'organe élastique (6) sont reliées respectivement à la deuxième plaque de montage (303) ; et la première extrémité de l'organe de limitation (5) est située dans l'espace de logement et reliée à l'organe élastique (6) ; dans laquelle
dans le cas où l'organe de limitation (5) est à la première position, l'organe élastique (6) est dans un premier état, et la deuxième extrémité de l'organe de limitation (5) évite la plaque de fixation (20) ; dans le cas où l'organe de limitation (5) est à la deuxième position, l'organe élastique (6) est dans un deuxième état, et la deuxième extrémité de l'organe de limitation (5) bute contre la plaque de fixation (20).

10. La structure de monture de lunettes selon la revendication 9, dans laquelle une deuxième portion de limitation (72) est disposée sur la pièce de fixation (7), et l'organe élastique (6) est situé entre la deuxième portion de limitation (72) et la deuxième plaque de montage (303).

11. La structure de monture de lunettes selon la revendication 1, dans laquelle un troisième trou traversant (308) est également disposé sur la première plaque de montage (301) ; dans laquelle
dans le cas où l'organe de limitation (5) est à la première position, l'organe de limitation (5) est écarté du troisième trou traversant (308) ; et dans le cas où l'organe de limitation (5) est à la deuxième position, au moins une portion de l'organe de limitation (5) est située dans le troisième trou traversant (308) et bute contre la plaque de fixation (20).

12. La structure de monture de lunettes selon la revendication 11, dans laquelle une deuxième extrémité de l'organe de limitation (5) est pourvue d'une deuxième portion crochet (51), la deuxième portion crochet (51) est située dans le troisième trou traversant (308), et dans le cas où l'organe de limitation (5) est situé à la première position, la deuxième portion crochet (51) bute contre une paroi interne du troisième trou traversant (308).

13. Un dispositif connecté à porter sur soi, comprenant la structure de monture de lunettes selon l'une quelconque des revendications 1 à 12.
